# FASCICULE DE BREVET EUROPEEN

(11) **EP 0 570 279 B1**
(45) Date de publication et mention de la délivrance du brevet: **09.08.1995**
(21) Numéro de dépôt: 93401210.5
(22) Date de dépôt: 12.05.1993
(51) Int. Cl.: A22B 3/06

(54) **Dispositif pour l'anesthésie automatique, par électrocution contrôlée, d'animaux de boucherie**
Automatische Elektroschock-Betäubungsanlage für Schlachtvieh
Device for automatic stunning of slaughter animals by controlled electrocution

(30) Priorité: 12.05.1992 FR 9205747
(43) Date de publication de la demande: 18.11.1993
(73) Titulaire: SA NORMANDIE MANUTENTION "NORMAN", Vimoutiers (Orne) (FR)
(72) Inventeur: SA NORMANDIE MANUTENTION "NORMAN", Vimoutiers (Orne) (FR)
(74) Mandataire: Wagret, Frédéric

(56) Documents cités:
- EP-A- 0 140 750
- EP-A- 0 140 750
- EP-A- 0 190 780
- CH-A- 157 020
- DE-A- 3 922 729
- FR-A- 2 599 223

## Description

La présente invention concerne un dispositif pour l'anesthésie automatique, par électrocution contrôlée, d'animaux de boucherie dans une chaîne d'abattage.

Plus spécialement, l'invention concerne un dispositif d'électrocution destiné à assommer et à rendre inconscient l'animal immédiatement avant son abattage et le dispositif est du type connu comportant deux électrodes aptes à s'appliquer sur les tempes latérales de l'animal, lequel est maintenu dans un couloir mobile où il est bloqué par gravité, ce couloir étant constitué de deux convoyeurs à bandes inclinées en V l'animal étant coincé par son propre poids dans cet espace et étant acheminé depuis l'entrée du double convoyeur vers l'extrémité où se trouvent les électrodes d'anesthésie.

On connaît de nombreux dispositifs visant à permettre une combinaison harmonieuse de la mise en place des électrodes sur les côtés de la tête de l'animal pendant la période de temps nécessaire à l'électrocution.

Dans le brevet européen n° 0 140 750 au nom du demandeur, on a décrit un dispositif du type spécifié dans lequel les électrodes sont animées d'un double mouvement.

Elles sont reliées entre elles par un dispositif de manoeuvre qui permet leur rapprochement centripète par rapport à l'axe médian du couloir acheminant les animaux, les électrodes étant ainsi déplaçables entre une position écartée et inactive et une position rapprochée dans laquelle elles viennent porter sur la tête de l'animal ; et en même temps les électrodes sont montées sur un support qui est lui-même déplacable comme cela est d'ailleurs connu par le brevet suisse n° 157.020.

L'invention vise à réaliser une nouvelle forme de mise en oeuvre d'un dispositif d'électrocution pour l'anesthésie d'animaux de boucherie dans lequel les électrodes sont solidaires d'un support mobile, les électrodes étant elles mêmes susceptibles de déplacements par rapport à leur support.

A cet effet et selon une première forme de réalisation, l'invention concerne un dispositif pour l'anesthésie automatique par électrocution contrôlée d'animaux de boucherie dans une chaîne d'abattage, et tel que défini dans la revendication 1 de la présente demande.

D'autres caractéristiques et avantages de l'invention ressortiront de la description qui suit et qui est donnée en rapport avec quelques formes de réalisation particulière présentées à titre d'exemple non limitatif.

La Figure 1 représente une vue en plan du dispositif d'électrocution selon une première mise en forme de l'invention.

La Figure 2 représente une vue en coupe longitudinale verticale du dispositif de la Figure 1.

Les Figures 3a, 3b et 3c représentent une vue en coupe verticale transversale du dispositif de la Figure 1 respectivement équipage position haute, électrodes ouvertes, équipage position basse électrodes ouvertes, et équipage position basse électrodes rapprochées.

Les Figures 4a, 4b et 4c représentent des vues en plan d'une variante du dispositif, dont la Figure 5 représente une vue en coupe longitudinale verticale les figures 4a, 4b et 4c donnant des vues du positionnement successif des électrodes.
Les Figures 6 et 7 sent dès vues respectivement en plan et en coupe longitudinale d'une troisième forme de réalisation dont les Figures 8a, 8b, 8c représentent des vues en coupe transversale selon les lignes VIII - VIII des figures 6 et 7.

La Figure 9 représente une vue schématique en perspective montrant la conformation des déflecteurs du dispositif selon les Figures précédentes.

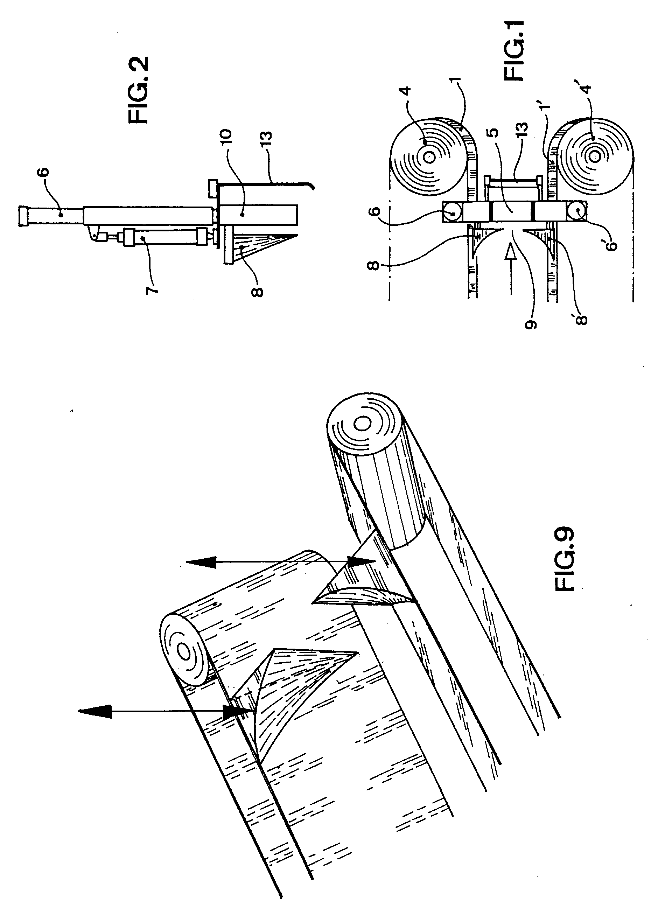

Selon les Figures 1, 2 et 3 on a représenté une première forme de réalisation dans laquelle l'équipage porteur des électrodes et des déflecteurs est monté mobile à déplacement vertical.

Le dispositif se compose de façon connue en soi de deux convoyeurs latéraux 1 et 1' qui acheminent les animaux étant coincés par gravité dans le passage défini entre les deux convoyeurs et définissant ensemble un couloir mobile 3 apte à acheminer les animaux selon la flèche de la Figure 1 en direction du poste d'électrocution.

Ce dernier est situé à proximité de l'extrémité terminale formant la sortie du couloir mobile.

Les deux convoyeurs sont formés de deux tapis sans fin inclinés et arrivés à l'extrémité terminale ils sont renvoyés par un tambour de retour respectivement 4, 4'.

Le dispositif d'électrocution est formé d'un équipage constitué d'une traverse 5 montée à coulissement vertical sur deux montants 6, 6' constitués de tubes de guidage sur lesquels est montée à coulissement, par exemple par l'intermédiaire de colonnes de guidage à billes, la traverse 5.

L'ensemble est manoeuvré par le vérin 7.

Suspendus sous la traverse sont prévus deux déflecteurs 8 et 8' définissant une paroi de déflection ; cette paroi offre une surface concave orientée vers l'arrivée de l'animal ; chaque déflecteur est orienté depuis la paroi du convoyeur correspondant 1 ou 1' vers l'avant et vers le centre.

Les deux déflecteurs 8 et 8' sont suspendus sous la traverse et viennent dans leur position active s'insérer dans le passage défini entre les deux convoyeurs 1 et 1' et constituant le couloir mobile.

Chaque déflecteur est en outre orienté et conformé de façon à finir en pointe vers le bas, la paroi de déflection étant orientée en pente vers le bas et vers l'avant.

Les déflecteurs sont propres à recevoir l'animal lorsque ce dernier avance avec le couloir mobile et ces déflecteurs orientent le museau et la tête de l'animal vers l'espace central 9 situé entre les deux déflecteurs 8 et 8' de façon à diriger la tête de l'animal vers le centre, à égale distance entre les électrodes.

Suspendues également à la traverse 5 les deux électrodes respectivement 10 et 10' sont disposées en arrière des deux déflecteurs, par rapport à l'avancement du convoyeur.

Elles sont montées à pivotement dans un plan vertical et transversal au couloir mobile, chacune selon un axe supérieur respectivement 11, 11' et elles se prolongent par une extension au delà de cet axe de pivotement ; de telle façon que les extensions peuvent être attaquées par un organe de manoeuvre tel que le vérin 12, l'extension du vérin supérieur 12 provoquant ainsi le rapprochement des deux électrodes 10 et 10' lors de la phase d'électrocution, ces deux électrodes venant alors s'appliquer sur la tête de l'animal engagée à travers l'invervalle 9 entre les deux déflecteurs 8 et 8'.

Un volet de détection 13 est suspendu à la traverse 5 et en arrière des électrodes (par rapport à l'avancement du couloir mobile).

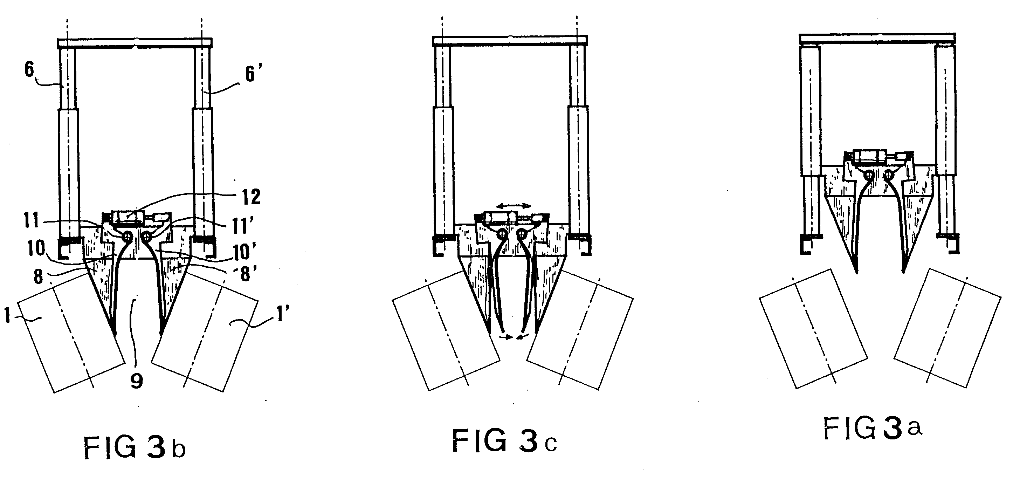

De sorte que lorsque la tête de l'animal pénètre par le jeu des déflecteurs dans l'intervalle 9 , l'extrémité de la tête vient porter sur le volet 13 lequel est légèrement déporté et actionne alors un contacteur (non représenté) ; ce dernier déclenche à la fois le rapprochement des électrodes par le jeu du vérin 12 et le passage du courant d'électrocution (figure 3c).

Pendant ce court invervalle de temps, qui peut être inférieur à une seconde, un dispositif d'asservissement peut ralentir, voire éventuellement arrêter, le mouvement des convoyeurs en stoppant ou en ralentissant ainsi l'avancement du corps de l'animal ; ce ralentissement ou cet arrêt, pendant un intervalle de temps extrêmement court et inférieur à une seconde, permettant le contact intime des électrodes sur la tête de l'animal, les électrodes étant sensiblement fixes par rapport à la tête.

Les électrodes sont immédiatement écartées dès l'arrêt du passage du courant et le mouvement d'avancement du couloir mobile est alors repris, l'animal avançant, son corps inanimé étant emporté avec le couloir formé des deux convoyeurs ; et dans ce même temps le vérin 7 a remonté l'équipage mobile verticalement vers le haut en dégageant ainsi le passage.

Sur la Figure 3a on a représenté la position de l'équipage mobile dans sa position relevée dégageant le passage interne aux deux convoyeurs 1, 1'.

Les figures 4a, 4b, 4c, 5 et 6 représentent une variante de réalisation dans laquelle les électrodes sont montées sur des volets battants, chacun formant déflecteur.

On retrouve ici les deux convoyeurs latéraux, respectivement 20 et 20', qui définissent comme précédemment un couloir mobile acheminant les animaux bloqués par gravité dans le passage en V vers le poste terminal d'électrocution aux fins d'anesthésie.

A cet effet, à ce poste et sensiblement au niveau de la sortie des animaux, on trouve deux volets montés pivotant sur un axe colinéaire avec l'axe de rotation du tambour 4, 4' correspondant permettant le retour du convoyeur.

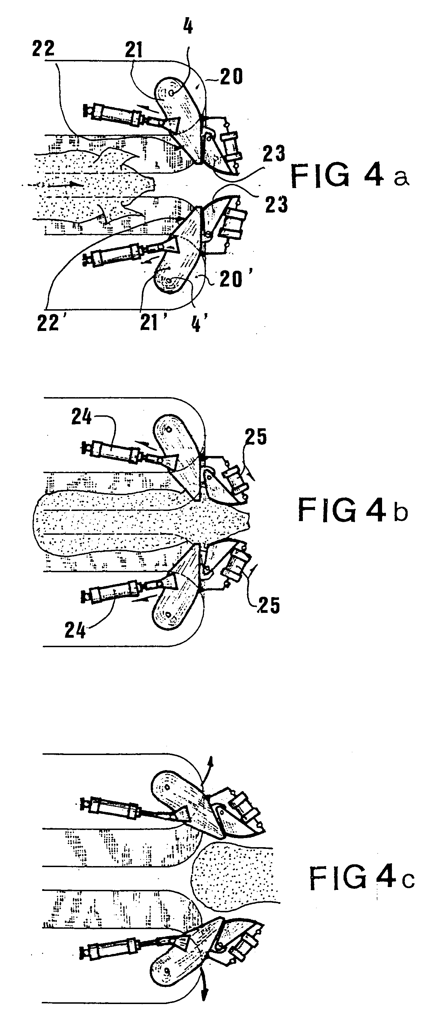

Ici la traverse est donc remplacée par deux bras supérieurs montés battants sur leur axe et déplaçables entre une position d'obturation telle que représentée sur les figures 4a et 4b et une position dégagée telle que représentée sur la figure 4c.

Les deux bras définissant les volets battants, respectivement 21, 21', supportent les déflecteurs 22, 22' dont les bords internes supportent à leur tour les électrodes formées de lames métalliques et prolongeant vers le centre chaque déflecteur 22, 22'.

Chaque déflecteur a une conformation inclinée vers l'avant et vers le centre depuis son bord voisin d'un convoyeur ; de sorte que, en plan et comme on le voit sur la Figure 4, les déflecteurs 22, 22' définissent une forme concave orientée vers l'arrivée des animaux dans le couloir mobile; tout en laissant libre un passage central formé par l'intervalle entre les deux bords internes des déflecteurs 22, 22', ce passage central étant occupé, en arrière des déflecteurs, par les électrodes 23, 23'.

Les déflecteurs 22, 22' sont, comme précédemment décrit, conformés de façon à définir une pointe orientée vers le bas et en pente vers l'avant et vers le bas.

Chaque électrode 23, 23' est en outre montée légèrement flottante par rapport à sa position médiane de repos dans laquelle l'électrode est dirigée étant orientée vers l'axe médian et longitudinal du couloir mobile en obturant sensiblement ce passage et l'intervalle laissé libre entre les bords centraux des deux volets. Les électrodes sont ainsi disposées sensiblement en V, pointe orientée dans la direction d'avancement des animaux.

On voit que chaque volet, formé du bras supérieur auquel sont suspendus les déflecteurs puis, en arrière, les électrodes, est ainsi monté déplaçable entre une position dite d'obturation en occupant sensiblement le passage formé par le couloir mobile et une position effacée dans laquelle les volets se rapprochent du plan formé par les parois des convoyeurs supportant les animaux, en s'écartant ainsi l'une de l'autre et en libérant par conséquent le passage formé par le couloir central.

Les volets sont montés à débattement libre sous la poussée du corps de l'animal tout en étant rappelés vers leur position d'obturation (en trait plein sur la Figure 4) par un organe de rappel qui est ici constitué pour chaque volet par un vérin pneumatique 24 mis sous tension lors du débattement du volet vers sa position d'ouverture et rappelant ainsi le volet vers sa position de fermeture.

On comprend que l'animal engagé dans le couloir mobile et avançant vers le poste d'électrocution rencontre par conséquent les déflecteurs dans un premier temps. La conformation des parois de déflection forme une surface de guidage de la tête de l'animal vers l'axe central, c'est-à-dire vers l'intervalle situé entre les deux déflecteurs ; la poursuite du mouvement amène alors la tête de l'animal en contact avec les électrodes légèrement flottantes, ce qui permet une adaptation des parois de contact des électrodes sur la tête de l'animal ; un dispositif de détection permet alors de constater le contact de la tête de l'animal sur les électrodes et, pendant le temps nécessaire à l'électrocution, envoie le courant de sorte que l'animal est immédiatement étourdi et rendu inconscient; la poursuite du mouvement du corps inanimé de l'animal entraîné par le couloir mobile provoque doucement l'ouverture des volets mobiles par poussée du corps inanimé sur les déflecteurs latéraux et la chute de l'animal, tandis que les volets reprennent leur position première pour accueillir l'animal ultérieur.

On peut également prévoir dans cette configuration un asservissement de la vitesse d'avancement du couloir mobile au positionnement de l'animal par rapport au poste d'électrocution et notamment un ralentissement de la vitesse pendant la période de contact de la tête et des électrodes et pendant la période de passage du courant d'électrocution.

Les dispositifs selon l'invention permettent une cadence extrêmement rapide de traitement d'animaux, notamment de porcs destinés à l'abattage, en vue de leur étourdissement avant les phases ultérieures.

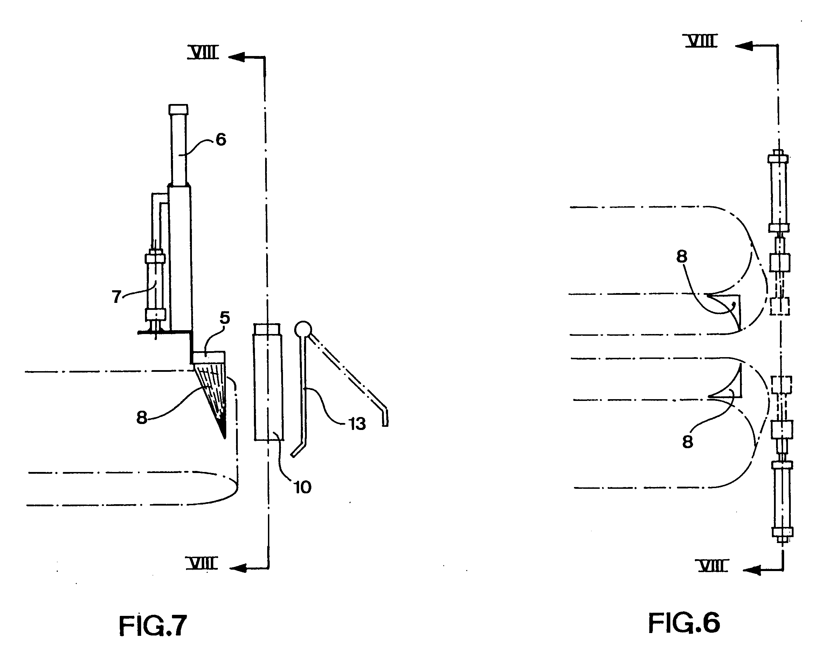

Les Figures 6, 7 et 8a, 8b, 8c, montrent un variante de réalisation voisine du dispositif selon les Figures 1, 2 et 3 et dans laquelle seuls les déflecteurs sont portés par l'équipage mobile formé de la traverse 5 manoeuvrée verticalement depuis le vérin supérieur 7.

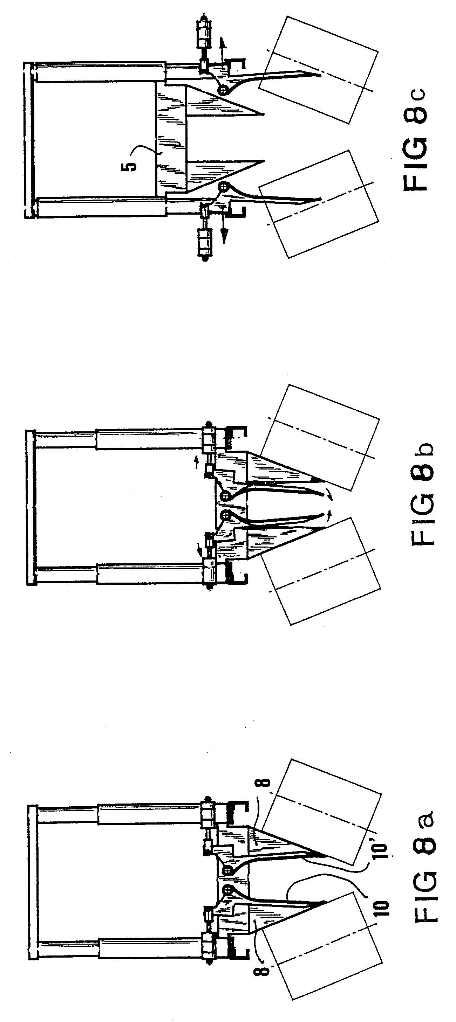

Sur les Figures 8a, 8b les déflecteurs sont représentés en trait plein dans leur position basse et sur la figure 8c dans leur position haute ; de même sur la figure 8c les électrodes sont représentées en position d'écartement maximum dégageant le passage après électrocution; sur la figure 8a les électrodes sont rapprochées dans une position intermédiaire d'attente de la tête de l'animal, sur la figure 8b les électrodes sont en position de pincement et d'électrocution.
Selon les figures 8a, 8b, 8c, 6 et 7, les électrodes 10, 10' ne sont pas montées solidaires de l'équipage mobile porté par la traverse 5. Les électrodes sont positionnées en arrière des déflecteurs et au delà du retour des convoyeurs latéraux ; les déflecteurs sont eux-mêmes positionnés à la sortie du couloir mobile formé par les deux convoyeurs.

Et les électrodes suivent un mouvement alternatif de rapprochement et d'éloignement sans élévation verticale ; le rapprochement des électrodes étant synchronisé avec la position basse des déflecteurs, de façon à ce que ce rapprochement et la prise de contact avec la tête de l'animal correspondent à l'engagement de cette tête entre les deux déflecteurs en position basse au sein du couloir mobile, le dégagement des électrodes par effacement latéral en fin de passage du courant s'accompagnant de la remontée des déflecteurs libérant alors le passage pour l'évacuation du corps inanimé.

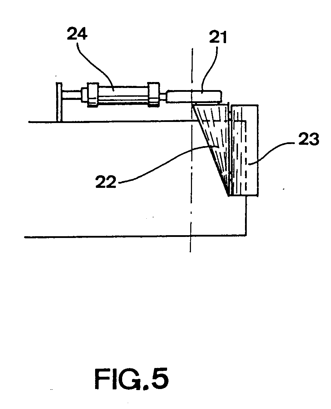

On précisera notamment, en considérant la seconde variante illustrée aux figures 4a, 4b, 4c et 5 que les électrodes montées flottantes ou pivotantes à l'extrémité interne des volets sont elles-mêmes manoeuvrées par un vérin pneumatique qui permet ainsi de ramener les électrodes dans leur position active de contact avec la tête de l'animal et plus spécialement, en fonction d'une certaine pression communiquée alors aux électrodes, à assurer un contact sûr et sans phénomène négatif d'arc électrique entre l'électrode elle-même et la peau de l'animal. La face des électrodes en contact avec la tête est légèrement bombée (convexe).

On comprend qu'en programmant la variation de la pression dans le vérin pneumatique associé aux électrodes, on assure un rappel des électrodes vers leur position active tout en permettant leur débattement pour autoriser l'insertion de la tête de l'animal, après quoi une mise sous pression plus élevée assure la position de contact d'électrocution.

Ainsi les électrodes sont en permanence ramenées vers leur position centrale mais sous une pression variable qui permet par conséquent dans un premier temps l'insertion de la tête de l'animal puis l'application d'une pression plus forte pour assurer le contact d'électrocution, ceci pendant la période durant laquelle l'avancement du convoyeur est au moins ralenti.

Dans cette forme de réalisation correspondant aux figures 4a, 4b, 4c et 5, le dispostif de détection du positionnement correct de l'animal peut être assuré par un détecteur (micro-contact par exemple) asservi à la position angulaire des électrodes; ce micro-contact est ainsi apte à détecter une position angulaire d'écartement des électrodes correspondant à l'insertion de la tête entre les électrodes; et ce micro-contact commande alors la séquence des opérations ultérieures notamment le ralentissement du convoyeur, la mise sous pression des vérins pneumatiques donnant un contact ferme électrodes contre la tête de l'animal et passage du courant d'électrocution.

Avantageusement dans cette forme de réalisation notamment, correspondant aux figures 4a, 4b, 4c et 5, l'ensemble de l'installation est asservi à des organes de programmation commandant et la mise sous pression des vérins pneumatiques commandant les volets et la pression appliquée aux vérins pneumatiques commandant les électrodes et le passage du courant et la vitesse d'acheminement du convoyeur.

Et plus spécialement le dispositif de programmation est prévu pour assurer la séquence des opérations suivantes:
a) les convoyeurs acheminent les porcs les uns derrières les autres à une vitesse déterminée correspondant à une cadence de traitement d'environ 600 à 700 porcs par heure soit à une vitesse de l'ordre de 3 à 4 m/s.
b) les volets dans ce premier temps sont en position fermée et ramenés dans leur position d'obturation active, en butée sur un organe d'appui contre lequel ils sont rappelés par leur vérin pneumatique soumis à une pression de rappel de l'ordre de 8 bars.
c) le groin de l'animal arrivant est ainsi guidé automatiquement par les parois de déflection formées par les volets latéraux vers l'intervalle central, la résistance des volets dans leur position de repos sous la pression du vérin pneumatique s'opposant à ce que l'animal les déplace par un mouvement parasite, le groin étant ainsi automatiquement amené avec l'avancement du convoyeur dans l'intervalle entre les deux volets.
d) le groin de l'animal étant engagé entre les deux volets, la vitesse du convoyeur est ramenée à une valeur correspondant sensiblement à la moitié de la vitesse précédente soit à une vitesse de l'ordre de 2 m/s.
e) le groin de l'animal est alors engagé entre les électrodes qui sont rappelées vers leur position centrale, alors en appui sur leurs volets supports correspondants par la pression de leur vérin pneumatique sous une pression de 2 bars, permettant l'écartement des électrodes et leur pivotement, les électrodes étant repoussées latéralement par l'avancement du groin et de la tête de l'animal.
f) l'écartement des électrodes sous la poussée de la tête de l'animal est détecté par un micro-contact qui constate ainsi la bonne position du groin entre les électrodes et envoie par conséquent un signal à l'ensemble de programmation.
g) le signal précédent déclenche dans un premier temps la mise sous pression élevée, de l'ordre de 8 bars, des vérins pneumatiques commandant le positionnement des électrodes de façon à appliquer sous pression chaque électrode contre la tête de l'animal et sensiblement dans le même temps la vitesse d'avancement du convoyeur est ramenée à un niveau de l'ordre de 1/5e à 1/6e de sa valeur précédente correspondant notamment à une vitesse de l'ordre de 1/2 m/s, enfin sensiblement encore dans le même temps un courant d'électrocution est envoyé aux électrodes pour provoquer l'anesthésie de l'animal.
h) un temporisateur commande, après un temps programmé postérieurement au signal précédent simultanément l'arrêt du passage du courant, la chute de pression dans les vérins pneumatiques respectivement commandant le positionnement angulaire des électrodes et commandant le positionnement angulaire des volets, ainsi que le retour à la vitesse maximale de l'ordre de 3 à 4 m/s du convoyeur en permettant ainsi l'évacuation du corps inanimé de l'animal qui chute à l'extrémité du convoyeur et qui est repris en vue du traitement ultérieur.
i) immédiatement ensuite et aprés la chute du corps de l'animal, les volets sont rappelés dans leur position active vers le centre du convoyeur sous la pression maximale pour accueillir le porc suivant, la vitesse du convoyeur étant alors maintenue à sa vitesse maximale jusqu'à l'engagement du groin de l'animal entre les extrémités centrales des volets et l'approche des électrodes.

## Revendications

1. Dispositif pour l'anesthésie automatique par électrocution d'animaux de boucherie, du type comportant deux convoyeurs (1,1') inclinés, formant entre eux un couloir mobile (3) en V, aptes à bloquer les animaux par gravité, et acheminer ces derniers vers un poste d'électrocution disposé à la sortie du couloir mobile et comportant deux électrodes latérales (10,10') aptes à s'appliquer sur les côtés de la tête de l'animal et à y faire passer un courant d'anesthésie, les électrodes étant montées déplaçables entre une position effacée permettant le passage du corps de l'animal après électrocution et une position active dans laquelle les électrodes s'appliquent sur la tête de l'animal, le dispositif comportant en outre des moyens de guidage (8,8') de la tête de l'animal vers un axe médian du couloir mobile (3), sensiblement à égale distance entre les électrodes (10,10'), et déplaçables entre une position effacée laissant passer les animaux et une position active au sein du couloir mobile,
lesdits moyens de guidage (8,8') étant montés mobiles selon une direction qui n'est pas colinéaire avec l'axe médian du couloir mobile (3) définissant la direction d'acheminement des animaux, caracterisé par un support mobile(5,6,6') des électrodes et des moyens de guidage comprenant une traverse horizontale (5) surplomblant les deux convoyeurs sensiblement à proximité de leur extrémité terminale, transversalement par rapport à l'axe d'acheminement dudit couloir mobile,ladite traverse (5) étant montée à coulissement vertical sur deux montants verticaux (6,6') et manoeuvrée par un moyen d'actionnement tel qu'un vérin (7), tandis que les deux électrodes (10,10') sont articulées sensiblement en leur sommet sur ladite traverse (5) et comportent une extension débordant vers le haut et recevant l'appui d'un organe mécanique tel qu'un vérin (12) permettant de commander l'écartement et le rapprochement des électrodes.

2. Dispositif selon la revendication 1, caractérisé en ce que lesdits moyens de guidage (8,8') incluent deux déflecteurs latéraux respectivement disposés à proximité de chaque convoyeur.

3. Dispositif selon la revendication 1 ou 2, caractérisé en ce que les électrodes (10,10') sont elles-mêmes montées mobiles par rapport à la traverse (5) de façon à permettre leur rapprochement et leur application sur la tête de l'animal pendant l'électrocution, en correspondance avec le positionnement des épaules de l'animal en butée sur les deux déflecteurs latéraux dans leur position active tandis que l'ensemble du dispositif comporte des moyens d'asservissement de la vitesse d'avancement du couloir mobile à une valeur réduite, au moins pendant le temps de contact des électrodes sur la tête de l'animal.

4. Dispositif selon l'une des revendications 2 à 3, caractérisé en ce que les deux déflecteurs correspondant (8,8') offrent chacun une paroi orientée depuis le bord du convoyeur vers l'avant et vers le centre de façon à orienter la tête de l'animal arrivant par effet de came vers l'axe central du couloir mobile (3), la zone centrale entre les bords internes des deux déflecteurs étant dégagée pour permettre l'engagement de la tête de l'animal en direction des électrodes (10,10') situées en arrière des déflecteurs, par lesquels les épaules de l'animal sont alors bloquées.

5. Dispositif selon l'une des revendications 2 à 4, caractérisé en ce que chaque déflecteur (8,8') est formé d'une paroi généralement orientée d'une part depuis le convoyeur latéral vers l'avant et vers l'axe central du couloir et également conformée et d'autre part en pointe vers le bas et vers l'avant, le bord interne de chaque déflecteur étant situé dans un plan sensiblement vertical.

6. Dispositif selon l'une des revendications 1 à 5, caractérisé en ce que les électrodes (10,10') sont montées à rapprochement et éloignement alternatif l'une vers l'autre, indépendamment du support (5) mobile des déflecteurs (8,8'), le rapprochement des électrodes étant synchronisé avec la position basse et active des déflecteurs (8,8') dans le couloir mobile (3).

7. Dispositif pour l'anesthésie automatique d'animaux de boucherie par électrocution contrôlée avant leur introduction dans une chaîne d'abattage et du type comportant deux convoyeurs (1,1') inclinés qui définissent entre eux un couloir mobile (3) en V dans lequel les animaux sont bloqués par gravité et sont acheminés vers le poste d'électrocution à la sortie dudit couloir, deux électrodes latérales (23,23') du poste d'électroduction aptes à s'appliquer sur les côtés de la tête de l'animal et à y faire passer un courant d'électrocution, les électrodes étant montées sur un support lui-même déplaçable entre une position effacée hors du passage de l'animal et une position active permettant le contact des électrodes,
caractérisé en ce que lesdites électrodes sont montées chacune à l'extrémité d'un volet battant (22,22') articulé latéralement et formant déflecteur pour le guidage de la tête de l'animal.

8. Dispositif selon la revendication 7, caractérisé en ce que l'axe d'articulation de chaque volet déflecteur battant est colinéaire avec l'axe du tambour (4,4') de renvoi du convoyeur situé du côté correspondant.

9. Dispositif selon la revendication 7 ou 8, caractérisé en ce que les électrodes (23,23') comprennent des lames conductrices situées sensiblement dans le prolongement du volet correspondant (22,22') de façon à faire saillie vers l'axe médian du couloir mobile (3), en refermant partiellement l'intervalle situé entre les extrémités des deux volets.

10. Dispositif selon l'une des revendications 7 à 9, caractérisé en ce que les électrodes (23,23') sont sensiblement parallèles au plan général du volet déflecteur (22,22') correspondant et sont situées sur le bord interne de ce dernier, légèrement en arrière par rapport au sens d'arrivée des animaux.

11. Dispositif selon l'une des revendications 7 à 10, caractérisé en ce que chaque électrode (23,23') est montée flottante à pivotement limité par rapport à une position de repos dans laquelle elle déborde du bord interne du volet déflecteur (22,22') vers l'axe médian du couloir mobile (3), la lame formant électrode étant susceptible de pivoter lors de la poussée de l'animal en cours et en fin d'électrocution pour permettre le passage du corps inanimé sortant du couloir mobile.

12. Dispositif selon l'une des revendications 7 à 11, caractérisé en ce que les bords internes de chaque volet déflecteur (22,22') situés vers le centre du couloir mobile (3) définissent entre eux un passage étroit permettant seulement l'insertion de la tête de l'animal, en direction des électrodes (23,23') situées en arrière desdits bords, les épaules de l'animal étant bloquées par les volets déflecteurs qui sont déplaçables par pivotement entre une position active sensiblement transversale à l'intérieur de ce passage et une position dégagée, chaque volet déflecteur étant ramené dans sa position d'obturation sensiblement transversale par rapport au couloir mobile par un organe de rappel (22).

13. Dispositif selon l'une des revendications 7 à 12, caractérisé en ce qu'il comporte des moyens d'asservissement de la vitesse d'avancement des convoyeurs (1,1') définissant le couloir mobile (3), de telle façon que cette vitesse soit au moins réduite pendant le temps de contact des électrodes avec la tête de l'animal.

14. Dispositif selon l'une des revendications 7 à 12, caractérisé en ce que l'organe de rappel des volets déflecteurs en position d'obturation est formé par un vérin pneumatique (24) mis sous tension par le pivotement du volet correspondant sous la poussée du corps inanimé de l'animal après électrocution et entrainé par le couloir mobile (3).

15. Dispositif selon l'une des revendications 7 à 14, caractérisé en ce que chaque volet déflecteur (22,22') est constitué dans sa partie active en contact avec l'animal par une paroi de déflection orientée sensiblement dans la position d'obturation du passage au sein du couloir mobile depuis la paroi du convoyeur vers l'avant et vers le centre, la partie inférieure de cette paroi étant orientée en pointe vers le bas et vers l'avant.

16. Dispositif selon l'une des revendications 7 à 15, caractérisé en ce que le profil de chaque face de contact des électrodes avec l'animal est convexe et cette face est associée à un vérin pneumatique (25) de rappel vers sa position active orientée vers le centre.

17. Dispositif selon l'une des revendications 7 à 16, caractérisé en ce qu'il comporte un ensemble de programmation prévu pour assurer la séquence des opérations suivantes :
a) les convoyeurs acheminent les animaux les uns derrière les autres à une vitesse déterminée correspondant à la vitesse maximale, voisine de 3 à 4 mètres/seconde;
b) les volets (21,21') sont alors en position fermée et ramenés dans leur position d'obturation active, en butée sur un organe d'appui contre lequel ils sont rappelés par vérin pneumatique (24) soumis à une pression de rappel de l'ordre de 8 bars;
c) le groin de l'animal arrivant est guidé automatiquement par les parois de déflection des volets latéraux vers l'intervalle central, la résistance des volets dans leur position de repos sous la pression du vérin pneumatique s'opposant à ce que l'animal les déplace par un mouvement parasite, le groin étant automatiquement amené avec l'avancement du convoyeur dans l'intervalle entre les deux volets;
d) le groin de l'animal étant engagé entre les deux volets, la vitesse du convoyeur est ramenée à une valeur inférieure et de l'ordre de la moitié de la vitesse en (a);
e) le groin de l'animal est alors engagé entre les électrodes (23) qui sont rappelées vers leur position centrale, alors en appui sur leurs volets correspondants et formant support par la pression de leur vérin pneumatique sous une pression limitée, permettant l'écartement des électrodes et leur pivotement, les électrodes étant repoussées latéralement par l'avancement du groin et de la tête de l'animal;
f) l'écartement des électrodes sous la poussée de la tête de l'animal est détecté par un micro-contact qui constate ainsi la bonne position du groin entre les électrodes et envoie par conséquent un signal à l'ensemble de programmation;
g) le signal précédent déclenche dans un premier temps la mise sous pression élevée, de l'ordre de 8 bars, des vérins (25) pneumatiques commandant le positionnement des électrodes de façon à appliquer sous pression chaque électrode contre la tête de l'animal et sensiblement dans le même temps la vitesse d'avancement du convoyeur est ramenée à un niveau de l'ordre de 1/5ème à 1/6ème de sa valeur prévue en (a) correspondant à une vitesse de l'ordre de 0,5m/s, et sensiblement encore dans le même temps un courant d'électroduction est envoyé aux électrodes pour provoquer l'anesthésie de l'animal;
h) un temporisateur commande, après un temps programmé postérieurement au signal précédent simultanément l'arrêt du passage du courant, la chute de pression dans les vérins pneumatiques respectivement commandant le positionnement angulaire des électrodes (25) et commandant le positionnement angulaire des volets (24), ainsi que le retour à la vitesse maximale de l'ordre de 3 à 4 m/s du convoyeur en permettant ainsi l'évacuation du corps inanimé de l'animal qui chute à l'extrémité du convoyeur et qui est repris en vue du traitement ultérieur; et
i) immédiatement ensuite et dès la chute de l'animal, les volets sont rappelés dans leur position active vers le centre du convoyeur sous la pression maximale pour accueillir l'animal suivant, la vitesse du convoyeur étant alors maintenue à sa vitesse maximale jusqu'à l'engagement du groin de l'animal entre les extrémités centrales des volets et l'approche des électrodes.

## Claims

1. Device for automatically stunning slaughter animals by electrocution, of the type comprising two inclined conveyors (1, 1') forming therebetween a mobile, V-shaped channel (3), adapted to restrain the animals by gravity and to guide them towards an electrocution station disposed at the exit of the mobile channel and comprising two lateral electrodes (10, 10') adapted to be applied on the sides of the animal's head and to cause a stunning current to pass therethrough, the electrodes being mounted to move between a retracted position allowing passage of the animal's body after electrocution and an active position in which the electrodes are applied on the animal's head, the device further comprising means (8, 8') for guiding the animal's head towards a median axis of the mobile channel (3), substantially at equal distance between the electrodes (10, 10') and movable between a retracted position allowing the animals to pass and an active position within the mobile channel, said guiding means (8, 8') being mounted mobile in a direction which is not colinear with the median axis of the mobile channel (3) defining the direction of routing of the animals, characterized by a mobile support (5, 6, 6') for the electrodes and the guiding means comprising a horizontal crosspiece (5) overlying the two conveyors substantially near their terminal end, transversely with respect to the axis of routing of said mobile channel, said crosspiece (5) being mounted for vertical slide on two vertical uprights (6, 6') and manoeuvred by an actuation means such as a jack (7), while the two electrodes (10, 10') are articulated substantially at their apex on said cross-piece (5) and comprise an upwardly projecting extension receiving the abutment of a mechanical member such as a jack (12) for controlling the spacing apart and approach of the electrodes.

2. Device according to Claim 1, characterized in that said guiding means (8, 8') include two lateral deflectors respectively disposed near each conveyor.

3. Device according to Claim 1 or 2, characterized in that the electrodes (10, 10') are themselves mounted to move with respect to the crosspiece (5) so as to allow their approach and application on the animal's head during electrocution, in register with the positioning of the animal's shoulders in abutment on the two lateral deflectors in their active position while the assembly of the device comprises means for servo-controlling the speed of advance of the mobile channel to a reduced value, at least during the time of contact of the electrodes on the animal's head.

4. Device according to one of Claims 2 to 3, characterized in that the corresponding two deflectors (8, 8') each offer a wall oriented from the edge of the conveyor forwardly and towards the centre so as to orient the head of the animal arriving by cam effect towards the central axis of the mobile channel (3), the central zone between the inner edges of the two deflectors being disengaged to allow engagement of the animal's head in the direction of the electrodes (10, 10') located to the rear of the deflectors, by which the animal's shoulders are then blocked.

5. Device according to one of Claims 2 to 4, characterized in that each deflector (8, 8') is formed by a wall generally oriented on the one hand from the lateral conveyor forwardly and towards the central axis of the channel and likewise shaped and on the other hand, pointed downwardly and forwardly, the inner edge of each deflector being located in a substantially vertical plane.

6. Device according to one of Claims 1 to 5, characterized in that the electrodes (10, 10') are mounted for alternate approach and spacing apart with respect to each other, independently of the mobile support (5) of the deflectors (8, 8'), the approach of the electrodes being synchronized with the lower, active position of the deflectors (8, 8') in the mobile channel (3).

7. Device for automatically stunning slaughter animals by controlled electrocution before their introduction in a slaughtering chain and of the type comprising two inclined conveyors (1, 1') which define therebetween a mobile channel (3) in V-form in which the animals are restrained by gravity and are routed towards the electrocution station at the exit of said channel, two lateral electrodes (23, 23') of the electrocution station adapted to be applied on the sides of the animal's head and to cause an electrocution current to pass therethrough, the electrodes being mounted on a support itself movable between a retracted position outside the animal's passage and an active position allowing contact of the electrodes, characterized in that said electrodes are each mounted at the end of a swinging flap (22, 22') articulated laterally and forming deflector for guiding the animal's head.

8. Device according to Claim 7, characterized in that the axis of articulation of each swinging deflector flap is colinear with the axis of the drum (4, 4') for guiding the conveyor located on the corresponding side.

9. Device according to Claim 7 or 8, characterized in that the electrodes (23, 23') comprise conducting blades located substantially in line with the corresponding flap (22, 22') so as to project towards the median axis of the mobile channel (3), partially closing the gap located between the ends of the two flaps.

10. Device according to one of Claims 7 to 9, characterized in that the electrodes (23, 23') are substantially parallel to the general plane of the corresponding deflector flap (22, 22') and are located on the inner edge of the latter, slightly to the rear with respect to the direction of arrival of the animals.

11. Device according to one of Claims 7 to 10, characterized in that each electrode (23, 23') is mounted to float with limited pivoting with respect to a rest position in which it projects from the inner edge of the deflector flap (22, 22') towards the median axis of the mobile channel (3), the blade forming electrode being capable of pivoting during thrust of the animal during and at the end of electrocution to allow passage of the inanimate body leaving the mobile channel.

12. Device according to one of Claims 7 to 11, characterized in that the inner edges of each deflector flap (22, 22') located towards the centre of the mobile channel (3) define therebetween a narrow passage allowing only the insertion of the animal's head, in the direction of electrodes (23, 23') located to the rear of said edges, the animal's shoulders being restrained by the deflector flaps which are movable by pivoting between an active position substantially transverse inside this passage and a disengaged position, each deflector flap being returned into its position of obturation substantially transverse with respect to the mobile channel by a return member (22).

13. Device according to Claims 7 to 12, characterized in that it comprises means for servo-controlling the speed of advance of the conveyors (1, 1') defining the mobile channel (3), so that this speed is reduced at least during the time of contact of the electrodes with the animal's head.

14. Device according to one of Claims 7 to 12, characterized in that the member for returning the deflector flaps into position of obturation is formed by a pneumatic jack (24) placed under tension by pivoting of the corresponding flap under the thrust of the inanimate body of the animal after electrocution and taken along by the mobile channel (3).

15. Device according to one of Claims 7 to 14, characterized in that each deflector flap (22, 22') is constituted in its active part in contact with the animal by a deflection wall oriented substantially in the position of obturation of the passage within the mobile channel from the wall of the conveyor forwardly and towards the centre, the lower part of this wall being oriented in a point downwardly and forwardly.

16. Device according to one of Claims 7 to 15, characterized in that the profile of each face of the electrodes in contact with the animal is convex and this face is associated with a pneumatic jack (25) for return towards its active position oriented towards the centre.

17. Device according to one of Claims 7 to 16, characterized in that it comprises a programmation assembly provided to ensure the sequence of the following operations:
a) the conveyors route the animals one after the other at a determined speed corresponding to the maximum speed, close to 3 to 4 metres/second;
b) the flaps (21, 21') are then in closed position and returned in their active position of obturation, in abutment on a bearing member against which they are returned by pneumatic jack (24) subjected to a return pressure of the order of 8 bars;
c) the snout of the arriving animal is automatically guided by the deflection walls of the lateral flaps towards the central gap, the resistance of the flaps in their rest position under the pressure of the pneumatic jack opposing the animals displacing them by a parasitic movement, the snout being automatically guided with the advance of the conveyor in the gap between the two flaps;
d) the animal's snout being engaged between the two flaps, the speed of the conveyor is reduced to a lower value, of the order of half the speed in (a);
e) the animal's snout is then engaged between the electrodes (23) which are returned towards their central position, then in abutment on their corresponding flaps and forming support by the pressure of their pneumatic jack under a limited pressure, allowing the electrodes to be moved apart and pivoted, the electrodes being repelled laterally by the advance of the snout and head of the animal;
f) the spacing apart of the electrodes under the thrust of the animal's head is detected by a micro-contact which thus ascertains the correct position of the snout between the electrodes and consequently sends a signal to the programmation assembly;
g) the preceding signal triggers off, in a first step, the placing under high pressure, of the order of 8 bars, of the pneumatic jacks (25) controlling positioning of the electrodes so as to apply each electrode under pressure against the animal's head and, substantially at the same time, the speed of advance of the conveyor is returned to a level of the order of 1/5th to 1/6th of its value provided in (a) corresponding to a speed of the order of 0.5 m/s, and also substantially at the same time, an electrocution current is sent to the electrodes in order to stun the animal;
h) a timer controls, after a programmed time later than the preceding signal, simultaneously, the stop of the passage of the current, the drop in pressure in the pneumatic jacks respectively controlling the angular positioning of the electrodes (25) and controlling the angular positioning of the flaps (24), as well as the return to the maximum speed of the order of 3 to 4 m/s of the conveyor, thus allowing evacuation of the inanimate body of the animal which falls at the end of the conveyor and which is taken up for subsequent treatment; and
i) immediately afterwards and as soon as the animal falls, the flaps are returned into their active position towards the centre of the conveyor under the maximum pressure to receive the following animal, the speed of the conveyor then being maintained at its maximum speed up to engagement of the animal's snout between the central ends of the flaps and approach of the electrodes.

## Patentansprüche

1. Automatische Elektroschock-Betäubungsanlage für Schlachtvieh mit zwei geneigten Transportbändern (1,1'), die miteinander eine V-förmige Transportbahn (3) bilden und geeignet sind, die Tiere durch Schwerkraft festzusetzen und sie zu einer am Ausgang der Transportbahn angeordneten Elektroschockstation zu transportieren, wobei letztere zwei seitliche Elektroden (10,10') umfaßt, die sich gegen die Seiten des Kopfes des Tiers anlegen und einen Betäubungsstrom durch den Kopf hindurchleiten können, wobei die Elektroden sich zwischen einer inaktiven Stellung, in der der Körper des Tieres nach dem Elektroschock passieren kann, und einer aktiven Stellung, in der sich die Elektroden an den Kopf des Tieres anlegen, hin- und herbewegen können und die Vorrichtung ferner Führungseinrichtungen (8,8') umfaßt, mit denen der Kopf des Tieres in einer Mittelachse der Transportbahn 3 im wesentlichen in gleichem Abstand zwischen den Elektroden (10,10') geführt wird und die zwischen einer inaktiven Stellung, in der die Tiere passieren können, und einer aktiven Stellung innerhalb der Transportbahn bewegbar sind, und wobei die Führungseinrichtungen (8,8') in einer Richtung, die nicht gleichgerichtet zur die Transportrichtung der Tiere definierenden Mittelachse der Transportbahn (3) verläuft, bewegbar sind,
gekennzeichnet durch eine bewegliche Halterung (5,6,6') für die Elektroden und Führungsmittel, die eine horizontale Traverse (5) umfaßt, die die beiden Transportbänder im wesentlichen im Bereich ihres äußeren Endes quer zur Bewegungsachse der Transportbahn übertagt, wobei die Traverse (5) vertikal gleichtend auf zwei vertikalen Ständern (6,6') angebracht ist und durch eine Betätigungseinrichtung, zum Beispiel einen Arbeitszylinder (7) betätigt wird, während die beiden Elektroden (10,10') im wesentlichen an ihrem Scheitel an der Traverse (5) schwenkbar gelagert sind und eine nach oben vorstehende Verlängerung aufweisen, auf die zur Steuerung des Auseinander- und Zusammenfahrens der Elektroden ein mechanisches Element, zum Beispiel ein Arbeitszylinder (12), wirkt.

2. Vorrichtung nach Anspruch 1, dadurch gekennzeichnet, daß die Führungseinrichtungen (8,8') zwei seitliche, jeweils in der Nähe der Förderbänder angeordnete Ablenkeinrichtungen aufweisen.

3. Vorrichtung nach Anspruch 1 oder 2, dadurch gekennzeichnet, daß die Elktroden (10,10') selbst reltiv zur Traverse beweglich angeordnet sind, so daß sie entsprechend der Position der in der aktiven Stellung der seitlichen Ablenkelemente an diesen anliegenden Schultern des Tieres während des Elektroschocks an den Kopf des Tieres angenähert und an ihn angelegt werden können, während die Vorrichtung Steuerungsmittel umfaßt, mit denen die Bewegungsgeschwindigkeit der Transportbahn zumindest während der Zeit des Kontaktes der Elektroden mit dem Kopf des Tieres auf einen geringeren Wert reduziert wird.

4. Vorrichtung nach einem der Ansprüche 2 bis 3, dadurch gekennzeichnet, daß die beiden entsprechenden Ablenkelemente (8,8') jeweile eine vom Rand des Transportbandes nach vorn und zur Mitte hin verlaufende Wandung aufweisen, so daß sie den herankommenden Kopf des Tieres durch Kurvenwirkung zur Mittelachse der Transportbahn (3) ausrichten, wobei der mittlere Bereich zwischen den inneren Kanten der beiden Ablenkelemente freibleibt, so daß der Kopf des Tieres in Richtung der hinter den Ablenkelementen, durch die die Schultern des Tieres bereits blockiert sind, befindlichen Elektroden (10,10') gehalten werden kann.

5. Vorrichtung nach einem der Ansprüche 2 bis 4, dadurch gekennzeichnet, daß die Ablenkelemente (8,8') jeweils aus einer jeweils gleich ausgebildeten Wandung bestehen, die im wesentlichen aus einer einerseits vom seitlichen Förderband aus nach vorn und zur Mittelachse der Transportbahn hin gerichteten und andererseits spitz nach unten und nach vorn verlaufenden Wandung bestehen, wobei die Innenkante der Ablenkelementen jeweils innerhalb einer im wesentlichen vertikalen Ebene liegt.

6. Vorrichtung nach einem der Ansprüche 1 bis 5, dadurch gekennzeichnet, daß die Elektroden (10,10') derart angeordnet sind, daß sie abwechselnd und unabhängig von der beweglichen Halterung (5) der Ablenkelemente (8,8') aufeinander zu und voneinander weg bewegt werden können, wobei die Annäherung der Elektroden mit der unteren aktiven Stellung der Abenkelemente (8,8') in der Transportbahn synchronisiert ist.

7. Automatische, kontrollierte Elektrnschock-Betäubungsanlage für einer Schlachtstraße zuzuführendes Schlachtvieh mit zwei geneeigten Förderbändern (1,1'), die miteinander eine V-förmige Transportbahn (3) bilden, in der die Tiere durch Schwerkraft festgesetzt und einer Elektroschockstation am Ende der Transportbahn zugeleitet werden, wobei zwei seitliche Elektroden (23,23') der Elektroschockstation sich an die Seiten des Kopfes des Tieres anlegen und durch den Kopf einen Elektroschock-Strom hindurchleiten können und wobei die Elektroden in einer Aufnahme montiert sind, die ihrerseits zwischen einer inaktiven Stellung abseits des Durchgangs des Tieres und einer die Anlage der Elektroden gestattenden aktiven Position bewegt werden können,
dadurch gekennzeichnet, daß die Elektroden jeweils am Ende einer Pendelklappe (22,22') angebracht sind, die seitlich gelenkig gelagert ist und als Ablenkelement zur Führung des Kopfes des Tieres dient.

8. Vorrichtung nach Anspruch 7, dadurch gekennzeichnet, daß die Gelenkachse der Pendel-Ablenkklappen jeweils mit der Achse der Umlenkrolle (4, 4') des Förderbandes der betreffenden Seite gleichgerichtet ist.

9. Vorrichtung nach Anspruch 7 oder 8, dadurch gekennzeichnet, daß die Elektroden (23,23') im wesentlichen in der Verlängerung der entsprechenden Klappe (22,22') gelegene leitende Zungen umfassen, die zur Mittelachse der Transportbahn (3) hin derart vorspringen, daß sie den Abstand zwischen den Enden der beiden Klappen zum Teil schließen.

10. Vorrichtung nach einem der Ansprüche 7 bis 9, dadurch gekennzeichnet, daß sich die Elektroden (23,23') im wesentlichen parallel zur Hauptebene der entsprechenden Ablenkklappe (22,22') erstrecken und an deren Innenkante relativ zur Annäherungsrichtung der Tiere etwas nach hinten versetzt angeordnet sind.

11. Vorrichtung nach einem der Ansprüche 7 bis 10, dadurch gekennzeichnet, daß die Elektroden (23,23') jeweils pendelnd mit begrenztem Schwenkbereich relativ zu einer Ruhestellung montiert sind, in der sie über die Innenkante der Ablenkklappe (22,22') zur Mittelachse der Transportbahn (3) hin vorstehen, wobei die die Elektrode bildende Zunge unter dem Schub des Tieres während der Ausübung des Elektroschocks und bei dessen Ende schwingen kann, um den Durchgang des leblosen Körpers am Ausgang der Transportbahn zu ermöglichen.

12. Vorrichtung nach einem der Ansprüche 7 bis 8, dadurch gekennzeichnet, daß die in Richtung der Mitte der Transportbahn (3) gelegenen Innenkanten der Abenkklappen (22,22') miteinander einen engen Durchgang bilden, der nur das Einführen des Kopfs des Tieres in Richtung der hinter diesen Kanten gelegenen Elektroden (23,23') gestattet, während die Schultern des Tieres durch die Ablenkklappen blokciert werden, wobei letztere zwischen einer im wesentlichen quergerichteten Stellung innerhalb des Durchgangs und einer freigegebenen Stellung verschwenkt werden und jeweils mittels eines Rückholelements (22) wieder in ihre im wesentlichen zur Transportbahn querverlaufende Verschlußstellung zurückgeführt werden.

13. Vorrichtung nach einem der Ansprüche 7 bis 12, dadurch gekennzeichnet, daß sie Mittel zur Steuerung der Bewegungsgeschwindigkeit der die Transportbahn (3) bildenden Förderbänder (1,1') umfaßt, mittels derer die Geschwidigkeit mindestens während der Dauer des Kotaktes der Elektroden mit dem Kopf des Tieres verringert werden kann.

14. Vorrichtung nach einem der Ansprüche 7 bis 12, dadurch gekennzeichnet, daß das Rückholelement, mittels dessen die Ablenkklappen in die Verschlußstellung zurückgeführt werden, aus einem Druckluftzylinder (24) besteht, der durch das Verschwenken der entsprechenden Klappe unter der Schubwirkung des durch die Transportbahn weiterbewegten leblosen Tierkörpers nach erfolgtem Elektroschock gespannt wird.

15. Vorrichtung nach einem der Ansprüche 7 bis 14, dadurch gekennzeichnet, daß die Ablenkklappen 22,22') jeweils in ihrem mit dem Tier in Kontakt kommenden aktiven Bereich aus einer Ablenkwandung bestehen, die in der Verschlußstellung innerhalb der Transportbahn von der Wandung des Förderbandes nach vorn und zur Mitte hinverläuft, wobei der untere Bereich dieser Wandung spitz nach unten und nach vorn gerichtet ist.

16. Vorrichtung nach einem der Ansprüche 7 bis 15, dadurch gekennzeichnet, daß das Profil der Kontaktflächen der Elektroden mit dem Tier konvex ausgebildet ist und mit einem Druckluftzylinder (25) zusammenwirkt, der die Elektroden in ihre aktive, zur Mitte hin gerichtete Stellung zurückholt.

17. Vorrichtung nach einem der Ansprüche 7 bis 16, dadurch gekennzeichnet, daß sie eine Programmiereinheit aufweist, die die Ausführung der folgenden Operationsfolge gewährleistet:
a) Die Förderbänder transportieren die Tiere nacheinander mit einer vorbestimmten, der Höchstgeschwindigkeit entsprechenden Geschwindigkeit im Bereich von 3 bis 4 m/sek.;
b) die Klappen (21,21') befinden sich dabei in ihrer geschlossenen und in die aktive Verschlußstellung zurückgezogenen Stellung in Anlage an dem Anlageelement, gegen das sie durch den Druckluftzylinder (24) mit einem Rückholdruck im Bereich von 8 bar angelegt werden;
c) die Schnauze des sich nähernden Tiers wird automatisch durch die Ablenkwandungen der seitlichen Klappen zum mittleren Abstand geleitet, wobei der durch den Druck des Druckluftzylinders bedingte Widerstand der Klappen in ihrer Ruhestellung verhindert, daß das Tier die Klappen durch eine falsche Bewegung verschiebt, und die Schnauze automatisch mit der Weiterbewegung des Förderbandes in den Zwischenraum zwischen den beiden Klappen eingeführt wird;
d) wenn sich die Schnauze des Tieres zwischen den beiden Klappen befindet, wird die Geschwindigkeit des Förderbandes auf einen geringeren Wert von etwa der Hälfte der für (a) geltenden Geschwindigkeit reduziert;
e) jetzt wird die Schnauze des Tieres zwischen den in ihre mittlere Stellung zurückgezogenen Elektroden (23) erfaßt, die zu diesem Zeitpunkt unter dem Druck ihrer Druckluftzylinder mit einem begrenzten Druck anliegen, der das Auseinanderschieben und Verschwenken der Elektroden gestattet, wobei die Elektroden durch die Vorwärtsbewegung der Schnauze und des Kopfes des Tieres seitlich zurückgeschoben werden.
f) die durch den Schub des Kopfes des Tieres bewirkte Auseinanderbewegung der Elektroden wird durch einen Mikrokontakt erfaßt, der auf diese Weise die richtige Stellung der Schnauze der Elektroden feststellt und folglich der Programmiereinheit ein Signal zuleitet.
g) das vorstehend genannte Signal bewirkt zunächst eine Erhöhung des Drucks der die Positionierung der Elektroden steuernden Druchluftzylinder (25) auf einen Wert im Bereich von 8 bar, so daß die Elektroden jeweils unter Druck an den Kopf des Tieres angelegt werden, und praktisch gleichzeitig wird die Fortbewegungsgeschwindigkeit des Förderbandes auf etwa 1/5 bis 1/6 der unter (a) vorgesehenen Geschwindigkeit, d.z. auf etwa 0,5 m/sk., reduziert, wobei ebenfalls praktisch gleichzeitig den Elektroden ein Elektroschock-Strom zugeleitet wird, der die Betäubung des Tieres bewirkt;
h) ein Zeitverzögerungselement bewirkt nach einer programmierten Dauer nach dem vorstehend beschriebenen Signal gleichzeitig die Unterbrechung des Stroms, den Druckabfall in den Druckluftzylindern, die die Winkelstellung der Elektroden (25) bzw. die Winkelstellung der Klappen (24) steuern, sowie die Erhöhung der Geschwindigkeit des Förderbandes auf die Höchstgeschwindigkeit von etwa 3 bis 4 m/sek. und die Abführung des leblosen Türkörpers, der am Ende des Förderbandes herunterfällt und für die Weiterbehandlung übernommen wird; und
i) unmittelbar danach werden sofort nach der Abführung des Tierkörpers die Klappen mit dem Höchstdruck in ihre aktive Position in der Mitte des Förderbandes zurückgezogen, um das nächste Tier zu empfangen, wonach die Geschwindigkeit des Förderbandes bis zum Erfassen der Schnauze des Tieres zwischen den mittleren Enden der Klappen zur Annäherung der Elektroden auf der Höchstgeschwindigkeit gehalten wird.
